# EUROPÄISCHE PATENTSCHRIFT

(11) **EP 1 111 374 B1**
(45) Veröffentlichungstag und Bekanntmachung des Hinweises auf die Patenterteilung: **17.12.2003**
(21) Anmeldenummer: 99125749.4
(22) Anmeldetag: 23.12.1999
(51) Int. Cl.: G01N 21/88

(54) **Erfassung von Unregelmässigkeiten der Stärke einer flexiblen Materialbahn**
Detection of non-uniformities of the thickness of a flexible web
Détection de non-uniformités de l'épaisseur d'une bande flexible

(43) Veröffentlichungstag der Anmeldung: 27.06.2001
(73) Patentinhaber: Opdix OptoElectronic GmbH, Beratung-Entwicklung-Vertrieb, 82538 Geretsried (DE); ThyssenKrupp Stahl AG, 47166 Duisburg (DE)
(72) Erfinder: Biele, Peter Dr., 58456 Witten (DE); Schwanke, Heinz-Günter, 46049 Oberhausen (DE); Reiter, Mathias, 81476 München (DE); Schmalfuss, Harald Dr., 82538 Geretsried (DE)

(56) Entgegenhaltungen:
- EP-A- 0 519 255
- US-A- 4 162 126
- US-A- 5 278 635

## Beschreibung

Diese Erfindung bezieht sich auf ein Verfahren und eine Vorrichtung zum Erfassen von Unregelmäßigkeiten der Stärke einer flexiblen Materialbahn. Damit sind besonders solche Unregelmäßigkeiten in der Stärke der Bahn gemeint, die entlang einer Längsrichtung der Bahn systematisch, d.h. im wesentlichen in der gleichen Verteilung über die Breitenpositionen der Bahn verlaufen. Das bedeutet nicht unbedingt, daß beispielsweise eine Erhöhung an einer bestimmten Position in der Breitenrichtung der Bahn über die gesamte Längserstreckung der Bahn hinweg identisch auftreten muß. Die Unregelmäßigkeit kann auch über einen größeren Abschnitt in der Längsrichtung in sich nicht sehr stark entlang der Längsrichtung verändernder Weise auftreten, d.h. eine Breitenverteilung der Unregelmäßigkeiten an einer Position in der Längsrichtung ähnelt einer Breitenverteilung in einer benachbarten Position in einer Längsrichtung relativ stark. Nur über relativ große Distanzen in der Längsrichtung treten deutliche Abweichungen in der Breitenverteilung von Unregelmäßigkeiten auf.

Solche Stärken-Unregelmäßigkeiten sind typisch für bestimmte Herstellungsverfahren von Bahnmaterialien, die entlang einer ausgedehnten Längserstreckung durchlaufend erfolgen, beispielsweise Walzvorgänge, Beschichtungsvorgänge usw. Auch bei anderen Verfahren, z. B. bei Ziehverfahren von Kunststoffmaterialien in der Längsrichtung, können solche typischen Unregelmäßigkeiten auftreten.

In vielen Fällen können Unregelmäßigkeiten der Stärke des Bahnmaterials nur in einem bestimmten Umfang toleriert werden. Wenn bestimmte Grenzwerte überschritten werden, so ist das betreffende Bahnmaterial als Ausschuss zu bewerten. Daher wird angestrebt, bereits im Produktionsprozess mitlaufende Überwachungsverfahren einzuführen, die zu einem möglichst frühen Zeitpunkt auf solche Fehler aufmerksam machen und damit eine frühzeitige Behebung der Störung ermöglichen. Dabei besteht jedoch die Schwierigkeit, dass bei vielen Produktionsverfahren eine genaue " Online"-Messung kaum möglich ist, beispielsweise weil das Material zu stark bewegt wird, weil es zu heiß ist, weil Anlagenteile den Zugang zu dem Bahnmaterial behindern und dergleichen mehr.

Zum Stand der Technik wird verwiesen auf die EP 0 519 255 A2, die ein Verfahren zum Prüfen eines von einer Wicklung abgewickelten und auf eine weitere Wicklung aufgewickelten Bahnmaterials auf Defekte beschreibt. Dazu wird das Bahnmaterial in einem geraden Bereich zwischen den Wicklungen mit einem Laserstrahl und Lichtsensoren optisch untersucht. Die Signalverarbeitung ist darauf ausgerichtet, den Einfluss von Signalstörungen aufgrund von topographischen Merkmalen des Bahnmaterials zu minimieren, um die Defekterfassung störungsfrei zu halten.

Ferner wird verwiesen auf die US 5,278,635, die die optische Untersuchung einer lichtempfindlichen Trommel auf Defekte zeigt.

Der vorliegenden Erfindung liegt somit das technische Problem zugrunde, eine verbesserte Möglichkeit zum Erfassen der oben beschriebenen Unregelmäßigkeiten der Stärke flexibler Materialbahnen anzugeben.

Erfindungsgemäß wird dieses Problem durch ein Verfahren gelöst, bei dem die Materialbahn zu einer Wicklung aufgewickelt wird, die Wicklung mit einem Lichtbündel bestrahlt wird, von der Wicklung reflektiertes Licht aus dem Lichtbündel ortsauflösend gemessen wird und aus der ortsauflösenden Messung Variationen des Oberflächenprofils der Wicklung infolge von Unregelmäßigkeiten der Stärke der Materialbahn ermittelt werden, sowie durch eine Vorrichtung die aufweist: eine Wickeleinrichtung zum Aufwickeln der Materialbahn zu einer Wicklung, eine Beleuchtungseinrichtung zum Bestrahlen der Wicklung mit einem Lichtbündel, eine ortsauflösende Sensoreinrichtung zum ortsauflösenden Messen von von der Wicklung reflektiertem Licht aus dem Lichtbündel aus der Beleuchtungseinrichtung und eine Auswerteeinrichtung zum Auswerten der ortsauflösenden Messung zur Ermittlung von Variationen des Oberflächenprofils der Wicklung infolge von Unregelmäßigkeiten der Stärke der Materialbahn.

Bevorzugte Ausgestaltungen sind in den abhängigen Ansprüchen und in der folgenden Beschreibung dargestellt. Dabei wird nicht im einzelnen zwischen dem erfindungsgemäßen Verfahren und der erfindungsgemäßen Vorrichtung unterschieden, so dass die Offenbarung in Bezug auf Verfahrensmerkmale sowie auf die damit direkt verknüpften Vorrichtungsmerkmale zu verstehen ist.

Die Grundidee der Erfindung besteht darin, die wie bereits erwähnt an sich häufig auftretende Systematik der hier betrachteten Stärken-Unregelmäßigkeiten dadurch auszunutzen, daß man das Material zu einer Wicklung aufwickelt, wobei sich die Stärken-Unregelmäßigkeiten übereinanderliegender Wicklungsschichten aufgrund der systematischen Eigenart der Unregelmäßigkeiten positiv und negativ aufaddieren. Es hat sich dabei herausgestellt, daß sich bei flexiblen Materialbahnen im allgemeinen eine Multiplikation der geometrischen Größe der jeweiligen Unregelmäßigkeit mit der Zahl der betroffenen Schichten einstellt. Dabei müssen nicht notwendigerweise alle bereits aufgewickelten Schichten betroffen sein, es kann durchaus auch im Verlauf des Wickelvorgangs erst eine Unregelmäßigkeit auftreten, die nach Verstärkung über eine gewisse Zahl von Wicklungsschichten zu beobachten ist.

Dabei ist erfindungsgemäß vorgesehen, eine optische Messung vorzunehmen, bei der auf die Wicklung ein Lichtbündel eingestrahlt wird, das von der Wicklung reflektiert wird, wobei das Reflexionslicht mit einer ortsauflösenden Messung erfaßt und im Hinblick auf Variationen des Oberflächenprofils der Wicklung ausgewertet wird. Die Variationen des Oberflächenprofils sind wiederum direkte Folge der zu erfassenden Stärkenschwankungen in der Materialbahn selbst.

Insbesondere hat es sich als vorteilhaft herausgestellt, mit dem optischen Verfahren in einem relativ großen Arbeitsabstand von der Wicklung arbeiten zu können, so daß ohne Schwierigkeiten "Online"-Messungen durchgeführt werden können. Dabei ist der für die Erfindung typische Effekt, daß durch Aufwicklung einer größeren Zahl von Materialbahnschichten eine Verstärkung der zu messenden geometrischen Abweichung erzeugt wird, von großer Hilfe.

In den allermeisten Fällen bedeutet die Notwendigkeit, das Bahnmaterial aufzuwickeln, keinen zusätzlichen Aufwand, weil das Bahnmaterial am Ende des zu überwachenden Prozeßschrittes ohnehin aufgewickelt werden soll. Dann muß an der Wickeleinrichtung lediglich eine erfindungsgemäße Vorrichtung mit der Beleuchtungseinrichtung, der ortsauflösenden Sensoreinrichtung und, gegebenenfalls auch an anderem Ort, der Auswerteeinrichtung vorgesehen werden.

Besonders gilt dies für Bleche, die zum einen nach Walzvorgängen und zum anderen auch nach Oberflächenveredlungs- und Beschichtungsvorgängen auf Stärkenhomogenität überwacht werden sollen.

Vorzugsweise wird bei der optischen Messung mit einem Laser als Lichtquelle gearbeitet und ferner vorzugsweise mit sichtbarem Licht. Ein Lichtbündel gemäß der Erfindung kann natürlich auch mit einer anderen Lichtquelle erzeugt werden, da es auf die Kohärenz des Lasers im Grunde nicht ankommt. Jedoch ist die Parallelität des Laserlichtes und damit die gute Strahlformbarkeit bzw. Fokussierbarkeit von Vorteil. Im übrigen bedeuten Laser in der heutigen Zeit keinen zu großen Kostenaufwand mehr. Natürlich kann auch mit anderen als sichtbaren Wellenlängen des Lichts gearbeitet werden, wobei jedoch eine ausreichende Reflexion durch das untersuchte Material gegeben sein muß. Jedoch stehen für sichtbares Licht günstige Lichtquellen zur Verfügung, insbesondere günstige Laser, und ist für sichtbares Licht bei vielen interessanten Materialien eine ausreichende Reflexion gegeben.

Von besonderem Vorteil ist auch die Monochromasie des Laserlichts, mit deren Hilfe man bei Verwendung eines darauf abgestimmten Farbfilters eine sehr effektive Unterdrückung von Störlichtsignalen realisieren kann. Besonders gilt dies, wenn man die Schmalbandigkeit des Lasers ausnutzt und ein entsprechend schmalbandiges Linienfilter verwendet. Es sind jedoch auch andere monochromatische Lichtquellen als Laser denkbar, wenngleich ungünstiger. Auch ist es möglich, ein Linienfilter zusammen mit einer schmalbandigen, jedoch nicht monochromatischen Lichtquelle zu verwenden, nämlich mit einer Lichtquelle, die mehrere Banden abstrahlt.

Zwei Varianten der Vermessung des reflektierten Lichts sind bevorzugt: Bei der ersten Variante wird ein spiegelreflektierter Anteil des Lichtbündels verwendet, indem ein spiegelreflektiertes Bündel in dem Reflexionslicht ausgewertet wird. Bei idealem Oberflächenprofil würde sich dabei nach dem klassischen Reflexionsgesetz ein vorherbestimmbarer Reflexionswinkel und damit eine bekannte Austrittsrichtung des spiegelreflektierten Bündels einstellen.

Abweichungen von dieser Austrittsrichtung sind daher ein Maß für Unregelmäßigkeiten des Oberflächenprofils durch lokale Verkippungen. Damit kann aus der Winkelabweichung vom idealen Reflexionswinkel die erste Ortsableitung des Oberflächenprofils entlang der Abtastrichtung der Oberfläche erfaßt werden. Durch eine Rückintegration läßt sich das eigentliche Oberflächenprofil errechnen.

Bei diesem Verfahren muß also mit dem Laserstrahl bzw. Lichtbündel eine - vorzugsweise parallele - Linie auf der Wicklungsoberfläche abgetastet werden, wobei gleichzeitig der Spiegelreflex mit seiner Abweichung vom jeweiligen Soll-Meßpunkt erfaßt wird. Bei diesem Verfahren sind daher Messungen des reflektierten Lichts über relativ lange Strecken notwendig. Dazu kann natürlich ein ortsauflösender Fotodetektor entlang dem Soll-Meßpunkt mit bewegt werden. Grundsätzlich ist es jedoch bevorzugt, auf bewegte Teile möglichst ganz zu verzichten, um die Zuverlässigkeit und Störungsfreiheit der Vorrichtung zu optimieren.

Anstatt nun eine sehr lange geschlossene Kette von separaten Fotodetektoren zu verwenden, kann auch eine Mehrzahl mit einem Anschluß geerdete und mit dem anderen mit zwischengeschalteten Widerständen in Reihe geschaltete, jedoch in einem Abstand voneinander angeordnete Fotodioden verwendet werden. Diese Fotodioden können beispielsweise durch identische Widerstände miteinander verbunden sein und untereinander identisch sein, so daß sich aus den an den jeweiligen Enden der Reihenschaltung abgegriffenen Strömen ermitteln läßt, an welcher Stelle in der Reihenschaltung ein Lichtsignal erfaßt wurde. Dabei sollte der Abstand zwischen benachbarten Fotodioden etwas kleiner als der in dieser Richtung zu erwartende Durchmesser des Spiegelreflexbündels sein. Dann ist immer zumindest eine der Fotodioden von Licht bestrahlt. Durch eine Normierung, beispielsweise durch Bildung des Quotienten aus der Differenz der Ströme und der Summe der Ströme läßt sich somit ein kontinuierliches Signal erzeugen, das den Verlauf des Lichteinfalls über die Fotodiodenreihe wiedergibt.

Einer solchen Fotodiodenanordnung kann ein Feld aus Linsen ("Linsenarray") vorgeschaltet sein, mit dem das Spiegelreflexlichtbündel auf die Fotodioden fokussiert wird. Damit können gewisse Öffnungswinkel des Spiegelreflexlichtbündels durch Rauhigkeiten auf der Oberfläche oder auch den Öffnungswinkel des einfallenden Lichtstrahls korrigiert werden, d.h. ein relativ starkes Signal auf den Fotodioden erzeugt werden.

Die notwendige Länge der ortsauflösenden Sensoreinrichtung läßt sich durch eine telezentrische Beleuchtung mit dem einfallenden Lichtbündel verringern. Dazu kann die Lichtquelle im Brennpunkt eines Spiegels angeordnet werden. Durch eine telezentrische Beleuchtung vereinfacht sich auch die Auswertung der Meßsignale.

Die zweite bevorzugte Möglichkeit der Auswertung des reflektierten Lichts besteht in einem sogenannten Lichtschnittverfahren. Damit wird ein Meßverfahren bezeichnet, bei dem das einfallende Lichtbündel bzw. der Laserstrahl auf der Wicklungsoberfläche eine Linie abfährt, wobei diese Linie außerhalb des direkten Spiegelreflexes unter einem Winkel zur Einfallsebene des Lichtbündels oder Laserstrahls beobachtet wird. In Abhängigkeit von diesem Winkel erscheint das Oberflächenprofil der Wicklung als Struktur der Linie, also beispielsweise als Welligkeit (bei einem aus der Perspektive des einfallenden Lichtstrahls geraden Linienzug auf der Wicklungsoberfläche). Nach einer entsprechenden geometrischen Korrekturrechnung ergibt sich aus der Struktur der Linie auf der Wicklungsoberfläche unmittelbar das Oberflächenprofil. Bei diesem Meßverfahren wird also mit der diffusen Streuung gearbeitet. Demzufolge ist dieses Verfahren für sehr stark spiegelnde und wenig diffus streuende Materialien weniger geeignet und umgekehrt das erstgenannte Verfahren für kaum spiegelnde und stark diffus streuende Materialien weniger geeignet. In vielen Fällen lassen sich aber auch beide Verfahren alternativ einsetzen.

Bevorzugt ist bei dem Lichtschnittverfahren eine statische Beleuchtung der Wicklungsoberfläche, d.h. eine zeitlich andauernde Beleuchtung der gesamten Linie. Dies kann durch eine entsprechende Linienoptik mit einer Laserlichtquelle geschehen. Dabei hat dann also das einfallende Lichtbündel einen im wesentlichen linienförmigen Querschnitt. Im anderen Fall einer in zeitlicher Abfolge ablaufenden Linienbeleuchtung, also einer Scan-Beleuchtung, ist häufig eine Bewegungsmechanik, beispielsweise ein Spiegelscanner, notwendig.

Die ortsauflösende Messung erfolgt vorzugsweise mit einer Videokamera, etwa einer CCD-Kamera. Es kann aber mit einer einzigen Videokamera die gesamte Breite der auf die Wicklungsoberfläche projizierten Linie erfaßt werden. Dabei nimmt man in Kauf, daß man an verschiedenen Stellen der Linie unter unterschiedlichen Winkeln der diffusen Reflexion arbeitet. Dadurch ist eine gewisse Korrekturrechnung bei der Auswertung notwendig, wenn man ein unverzerrtes Bild des Oberflächenprofils der Wicklung erhalten will. Wegen der auch bei diesem Verfahren notwendigen Breite des Gesamtbildformats kann es hier sinnvoll sein, mehrere nebeneinander angeordnete Videokameras zu verwenden, auch um die durch kurze Brennweiten der Abbildungsobjektive unvermeidlichen Verzerrungen zu umgehen.

Im Hinblick auf die Auswertung der Meßdaten der ortsauflösenden optischen Messung sind folgende Maßnahmen bevorzugt: Je nachdem welche spezifischen Oberflächenprofilstrukturen auf der Wicklung erfaßt werden sollen, kann es sinnvoll sein, für das Oberflächenprofil eine Approximation zweiter Ordnung anzusetzen und nur Abweichungen von der approximierten Kurve als Variation zu betrachten, die auf Unregelmäßigkeiten in der Stärke des Bahnmaterials zurückgehen. Dies liegt daran, daß sich über die Breite der Wicklung ein gewisses Durchhängen ergeben kann oder eine Schieflage durch eine Fehlausrichtung zwischen der Wicklungsachse und der optischen Messung und dergleichen mehr. Auch können Taumel- und Gierbewegungen auftreten, also zeitlich veränderliche Verkippungen. Diese sich über die gesamte Breite der Wicklung erstreckenden Effekte können durch die quadratische Approximation und Differenzbildung eliminiert werden. Soweit die Approximation mit Meßdaten aus im Vergleich zur Umdrehungsfrequenz der Wicklung kurzen Zeitspannen erfolgt, gilt dies auch für die zeitabhängigen Störungen. Ansonsten mitteln sich diese durch eine zeitliche Mittelwertbildung über eine oder mehrere Umdrehungen der Wicklung heraus.

Zusätzlich oder alternativ zu der quadratischen Approximation ist auch eine Hochpaßfilterung möglich (im Bezug auf die der Achse der Wicklung entsprechende Ortskoordinate), die eine ähnliche Wirkung zeigt.

Weiterhin hat es sich als sehr wirkungsvoll herausgestellt, bezüglich der lokalen Meßwerte eine Mittlung über mehrere Einzelmessungen durchzuführen, bevor die ermittelte Oberflächenprofilkurve bzw. Ableitungskurve weiter verarbeitet wird. Durch diese Mittelwertbildung können verschiedenste Störungen einschließlich mechanischer Schwingungen entfernt werden. Vor allem ist aber auch möglich, hierbei aus den unvermeidlichen Eigenbewegungen der Wicklung Vorteile zu ziehen, indem sich die durch die Eigenbewegungen über mehrere Pixel der ortsauflösenden Sensoren laufenden Signale einzelner Stellen in der Mittelwertbildung mit größerer Genauigkeit auf einen realistischen Mittelwert zurückführen lassen, als dies der ursprünglichen Pixelauflösung entspricht. Hier kann also durch die Eigenbewegungen der Wicklung in Verbindung mit der durch die systematische Eigenart der zu messenden Unregelmäßigkeiten ermöglichten zeitlichen Mittelwertbildung eine die Pixelauflösung weit übertreffende Meßgenauigkeit erzielt werden. Annäherungsweise ergibt sich als Faktor statistisch die Wurzel der in die Mittelwertbildung eingehenden Meßwertzahl; bei 100 Messungen kann die Genauigkeit also um etwa eine Größenordnung besser als die Pixelauflösung liegen.

Schließlich kann es bei im Vergleich zu dem Abstand zwischen der Wicklungsoberfläche und der erfindungsgemäßen Beleuchtungseinrichtung und Sensoreinrichtung ins Gewicht fallender Wickelhöhe sinnvoll sein, aus der Mechanik der Wickeleinrichtung oder aus der erfindungsgemäßen Messung selbst ein für die erreichte Wickelhöhe, also gewissermaßen den Radius der Wicklung, stehendes Wickelhöhensignal zu erzeugen und dies zur Korrektur des Bildfeldes bzw. des Abbildungsmaßstabs und auch zur Korrektur geometrischer Korrekturrechnungen bei der Lichtschnitt-Technik zu verwenden. Besonders betrifft dies den Übergang zwischen den Bildfeldern mehrerer Videokameras, wenn diese bei der Lichtschnitt-Technik verwendet werden.

Bei der Bildverarbeitung ergeben sich in der Regel Intensitätsverteilungen für die einzelnen Lichtsignale. Es hat sich als vorteilhaft herausgestellt, hier keine Bestimmung des absoluten Maximalwerts allein durchzuführen. Vielmehr hat es sich bewährt, eine Schwerpunktsbildung durchzuführen, die jedoch nicht notwendigerweise eine vollständig über die Intensitätsverteilung integrierende Schwerpunktsbildung sein. Vielmehr kann eine sehr gute Genauigkeit bei geringem Rechenaufwand allein schon dadurch erreicht werden, daß die Meßpunkte mit maximaler Steigung und der Meßpunkt mit dem absoluten Maximalwert ermittelt und aus diesen drei Werten ein Mittelwert gebildet wird.

Bei der Bildverarbeitung und -auswertung ist es generell bevorzugt, die Datenverarbeitung mit einem in der Videokamera integrierten Mikroprozessor, also gewissermaßen mit einer "intelligenten" Videokamera, durchzuführen. Diese kann dann an einen Industrie-PC oder anderweitigen Rechner zur Meßwertsammlung und -darstellung angeschlossen sein. Eine solchermaßen modulare Lösung ist schon deswegen vorzuziehen, weil sich die konstruktiven Besonderheiten der Erfindung damit weitgehend auf den elektronischen Teil der Videokamera beschränken und die anderen Teile der erfindungsgemäßen Vorrichtung konventionell sein können.

Im folgenden wird die Erfindung anhand zweier konkreter Ausführungsbeispiele verdeutlicht. Dabei offenbarte Einzelmerkmale können auch in anderen als in dargestellten Kombinationen erfindungswesentlich sein. Im einzelnen zeigt:
Fig. 1 eine schematische Darstellung des erfindungsgemäßen Verfahrens bei Messung im Spiegelreflex;
Fig. 2 eine schematische Darstellung einer Vorrichtung zu dem Verfahren nach Fig. 1;
Fig. 3 eine Darstellung einer Beleuchtungseinrichtung kombiniert mit einer Sensoreinrichtung in der Vorrichtung nach Fig. 2;
Fig. 4 eine schematische Darstellung eines weiteren Ausführungsbeispiels für ein erfindungsgemäßes Verfahren, bei dem das Lichtschnittverfahren verwendet wird;
Fig. 5 eine perspektivische Darstellung einer Fig. 4 entsprechenden Vorrichtung;
Fig. 6 die Darstellung eines Querschnitts durch eine Intensitätsverteilung eines Lichtsignals bei einem Verfahren gemäß Fig. 4 und 5;
Fig. 7 eine Höhenprofildarstellung, die mit dem Verfahren gemäß Fig. 4 gemessen wurde.

Die folgenden Beispiele beziehen sich auf die Messung an Feinblechen, bei denen es nach der Walzung von Warmband zu lokalen Unregelmäßigkeiten der Stärke des Blechs mit festen Breitenpositionen über die Bandlänge kommen kann. Ähnliche Phänomene treten beispielsweise bei der Beschichtung solcher Bleche mit Zink oder anderen Legierungen auf. Konventionellerweise wurden diese Defekte durch Inspektion mit dem Auge oder durch Anschleifen einer Probe unter Zug untersucht, so daß nur sehr grobe Online-Messungen oder gar keine Online-Messungen möglich waren.

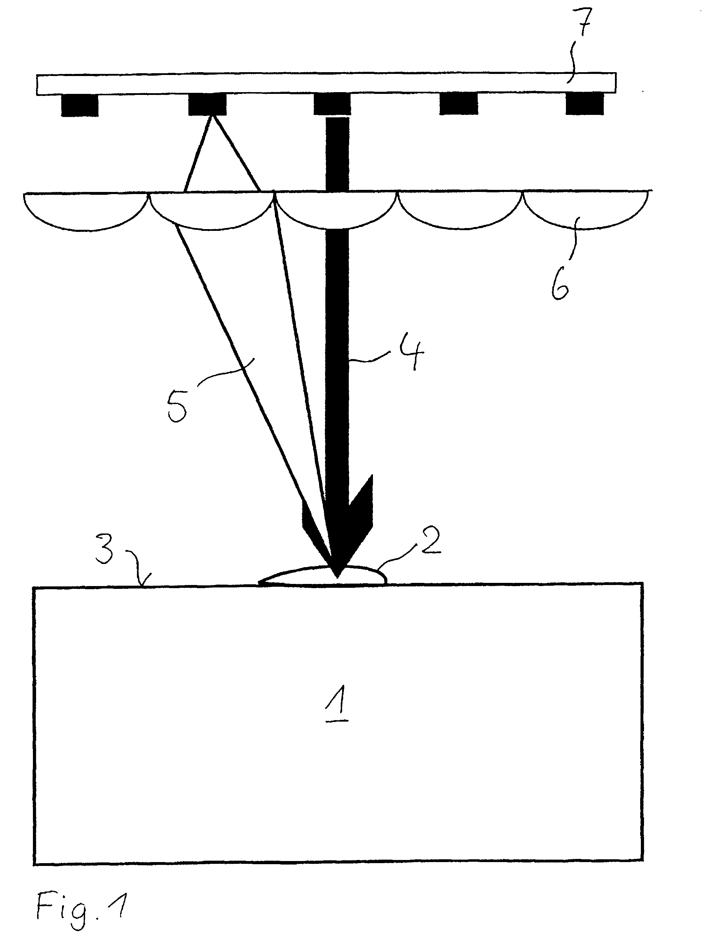

Fig. 1 zeigt nun, wie eine erfindungsgemäße Online-Messung hier Abhilfe schafft. im unteren Bereich der Fig. 1 ist schematisch eine aus dem gewalzten Blech gebildete Wicklung 1 ("coil") dargestellt. Schematisch dargestellt ist ferner eine Höhenprofilunregelmäßigkeit 2 auf der Oberfläche 3 der Wicklung 1. Mit einem nicht näher dargestellten Laser wird ein Laserstrahl 4 auf die Oberfläche 3 der Wicklung 1 gestrahlt, der auf der Oberfläche 3, in der in Figur 1 dargestellten Situation im Bereich der Unregelmäßigkeit 2 des Oberflächenprofils, reflektiert wird. Da die Oberfläche 3 der Wicklung 1 nicht völlig glatt ist, kommt es dabei zu einer gewissen Winkelaufweitung des spiegelreflektierten Bündels 5, die in Fig. 1 symbolisch dargestellt ist. Die in Fig. 1 dargestellte Winkelabweichung des reflektierten Lichtbündels 5 gegenüber dem einfallenden Lichtbündel bzw. Strahl 4 ist Folge einer lokalen Verkippung der Oberfläche 3 im Bereich der Unregelmäßigkeit 2.

Mit einem Zonenlinsenarray 6 wird das keilförmig aufgeweitete Spiegelreflexbündel 5 auf eine hier nur symbolisch dargestellte positionsempfindliche Fotodiodenkette 7 fokussiert. Dabei handelt es sich um die oben bereits beschriebene Verschaltung einzelner Fotodioden, so daß, was in Fig. 1 nicht dargestellt ist, der durch die Fokussierung mittels des Zonenlinsenarrays 6 gebildete Spot einen größeren Durchmesser als der Nächstnachbarabstand zwischen den Fotodioden 7 aufweisen muß.

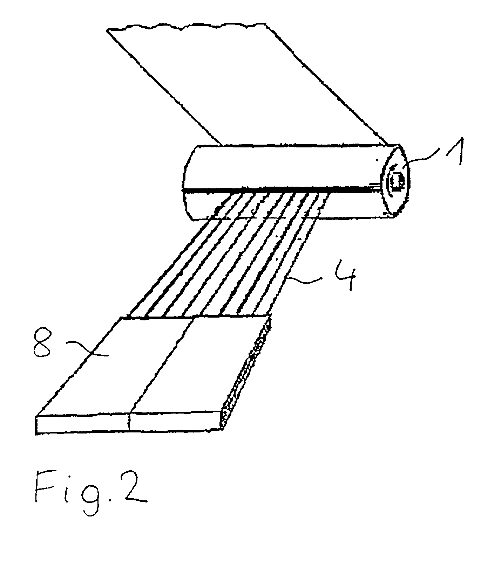

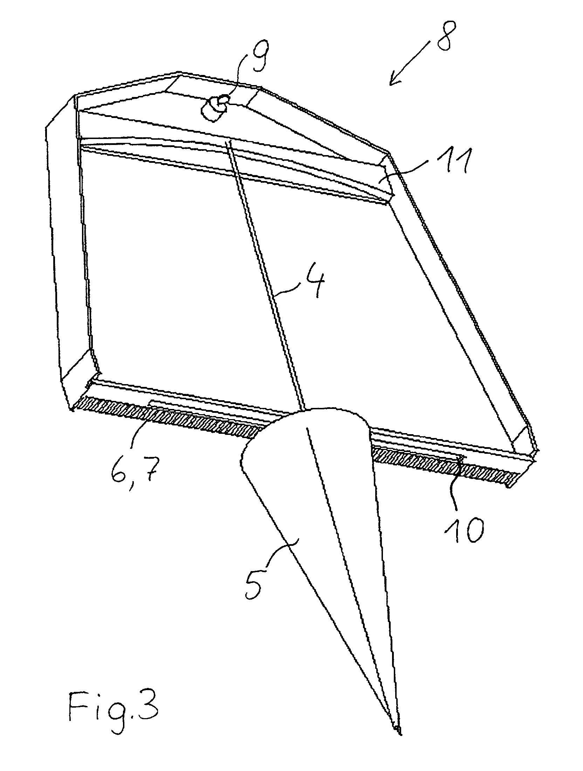

Dabei sind der einfallende Lichtlaserstrahl 4 und die Spiegelreflexkeule 5 zu entgegengesetzten Richtungen um etwa 10° aus der Zeichenebene der Fig. 1 verkippt, was den anhand Fig. 3 erläuterten Aufbau der optischen Elemente vereinfacht. Aus dem Quotienten aus der Differenz und der Summe der beiden an den beiden Enden der Kette 7 abzugreifenden Strömen läßt sich eine mittlere Auftreffposition des durch das Zonenlinsenarray 6 gebildeten Fokuspunkts der Spiegelreflexkeule 5 ermitteln. Wird nun in einer anhand der Fig. 2 und 3 näher beschriebenen Weise der Laserstrahl 4 rasternd über die Oberfläche 3 der Wicklung 1 bewegt, so läßt sich daraus die erste Ortsableitung des Profils der Oberfläche 3 entlang der Rasterrichtung des Laserstrahls 4 ermitteln.

Fig. 2 zeigt ein optisches Modul 8, das den den Laserstrahl 4 erzeugenden Laser sowie die Fotodiodenkette 7 und weitere optische Bauteile enthält. Aus diesem optischen Modul 8 wird die Oberfläche 3 der Wicklung 1 mit telezentrischer (d.h. parallel verschobener) Führung des Laserstrahls 4 linienförmig abgerastert, während sich die Wicklung 1 weiterdreht.

Fig. 3 zeigt schematisch den inneren Aufbau des optischen Moduls 8 aus Fig. 2 mit folgenden Einzelheiten: Im oberen Bereich der Figur ist ein Schwingspiegel 9 als Scanelement eingezeichnet, der von einem nicht dargestellten Laser bestrahlt wird. Der Schwingspiegel läßt den reflektierten Strahl über einen weiteren geraden Spiegel 10 im unteren Bereich des dargestellten optischen Moduls 8 laufen, von dem aus der wiederum reflektierte Laserstrahl auf einen konkavparabolischen Spiegel 11 zur Erzeugung eines telezentrischen Scanstrahls gerichtet wird. Von dem Telezentrizitätsspiegel 11 aus wird die in Fig. 3 nicht dargestellte Oberfläche 3 der Wicklung 1 telezentrisch und linienhaft scannend beleuchtet. Das spiegelreflektierte Licht 5 wird von der in Fig. 3 nur angedeuteten Anordnung aus dem Zonenlinsenarray 6 und der Fotodiodenreihe 7 erfaßt. Dieses ist im unteren Bereich des optischen Moduls 8 neben dem bereits erwähnten Spiegel 10 angeordnet. In Fig. 3 ist das auf der Oberfläche 3 der Wicklung 1 spiegelreflektierte Licht 5 wiederum schematisch als (übertriebene) Keule dargestellt, wobei hier keine lokale Verkippung angenommen wurde; d.h. der Strahl 4 wird ausgeweitet in sich selbst zurückreflektiert.

Durch die telezentrische Führung des Laserstrahls 4 kann vermieden werden, daß sich zu große Reflexionswinkel in den Randbereichen der Wicklung ergeben, so daß die Ausdehnung des Zonenlinsenarrays 6 und der Fotodiodenkette 7 nicht zu groß gewählt werden muß. Zu beachten ist, daß die die Abmessungen des optischen Moduls 8 überschreitende Brennweite des Parabolspiegels 11 bei der Anordnung in Fig. 3 gewissermaßen gefaltet wurde.

Um Störeinflüsse durch neben der Drehung auftretende Eigenbewegungen der Wicklung 1 und aufgrund anderer Ursachen zu minimieren, wird mit relativ hohen Abtastfrequenzen im Bereich von 5 - 10 kHz gearbeitet. Die durch die Scanbewegung des Schwingspiegels 9 abgefahrene Linie entlang der Oberfläche 3 der Wicklung 1 wird datenverarbeitungstechnisch in eine Anzahl von Punkten aufgeteilt, denen die bei der jeweiligen Position des Schwingspiegels 9 gemessenen Schwerpunktlagen des Lichteinfalls auf die Fotodioden zugeordnet werden. Durch eine Aufintegration dieser Daten für jeden der Punkte entlang der Linie auf der Oberfläche 3 können dann die Störungen weggemittelt werden und eine sehr gute Auflösung im Bereich lokaler Erhöhungen von 50 Mikrometer (nach Rückintegration) erzielt werden. Außerdem können die Eigenbewegungen der Wicklung 1 auch durch Frequenzfilterverfahren beseitigt werden, da sie typische Störfrequenzen aufweisen.

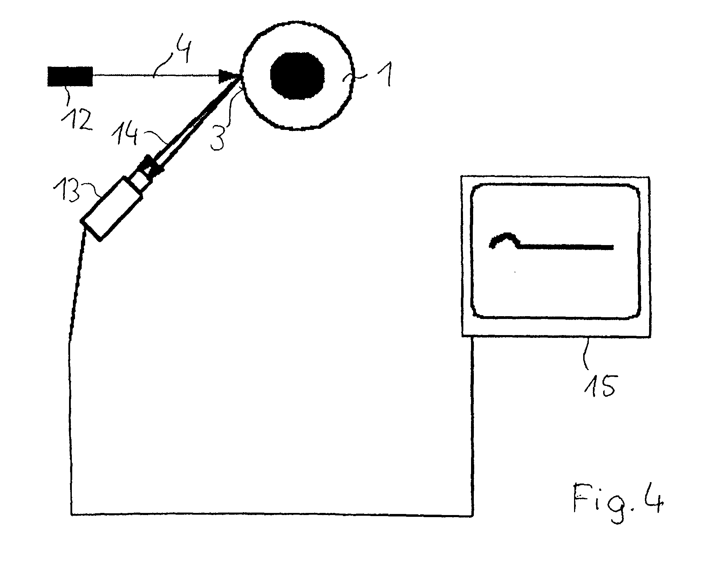

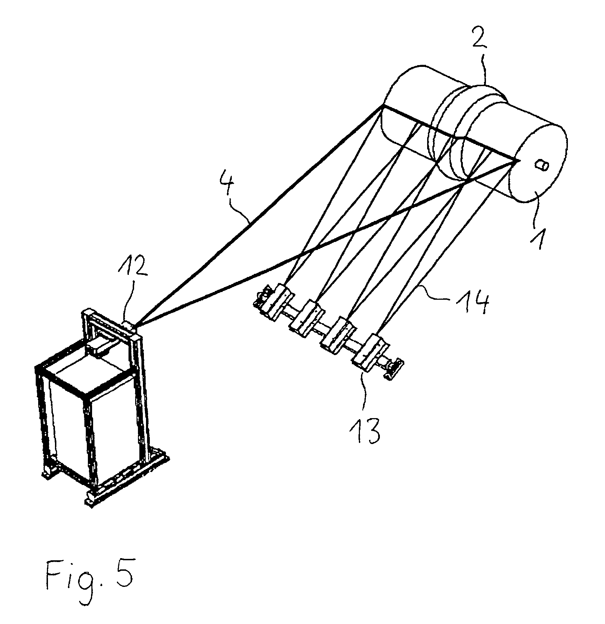

Die Fig. 4 - 7 zeigen als zweites Ausführungsbeispiel die zweite Variante des erfindungsgemäßen Verfahrens. Dabei wird mit einem Laser und einer nicht näher dargestellten Linienoptik, die in einem optischen Modul 12 zusammengefaßt sind, die Oberfläche 3 der Wicklung 1 mit einer statischen achsenparallelen Linie beleuchtet. Der Laser hat eine Leistung von 750 mW und eine Wellenlänge von 670 nm. Mit der Linienoptik erzeugt das Modul 12 eine Linie einer Breite von etwa 4 mm auf der 5 m entfernten Oberfläche 3 der Wicklung 1. Unter einem Winkel von etwa 30° zu der Beleuchtungsebene wird diese Linie mit in Richtung senkrecht zu der Papierebene der Fig. 4 aufgereihten vier CCD-Kameras 13 beobachtet, vgl. Fig. 5. Zu beachten ist, daß die CCD-Kameras 13 dabei auf der Oberfläche 3 der Wicklung 1 diffus reflektiertes Licht 14 messen. Die CCD-Kameras 13 enthalten ein auf die Wellenlänge des Lasers abgestelltes Farbfilter zur Unterdrückung von Störlicht aus der Umgebung.

Unter Berücksichtigung des Beobachtungswinkels von 30° läßt sich aus der von der CCD-Kamera aufgezeichneten Linie das Oberflächenprofil auf der Wicklung 1 berechnen. Dies ist schematisch in dem an die CCD-Kamera 13 angeschlossenen Monitor 15 dargestellt (in Fig. 5 weggelassen). Dabei sind im vorliegenden Fall vier CCD-Kameras eingesetzt worden, um ein der Breite der Wicklung 1 von in diesem Fall bis zu 2000 mm entsprechendes Bildfeld zu erreichen. Die Darstellung des Monitors 15 ist in soweit nicht maßstabsgerecht. Die Höhe des Bildfeldes sollte dazu ausreichen, daß die von den CCD-Kameras 13 erfaßte Lichtlinie mit zunehmender Wicklungshöhe durch das Bildfeld wandern kann, aber innerhalb des Bildfeldes verbleibt. Mit der Verwendung mehrerer CCD-Kameras 13, die so verschaltet sind, daß sie eine kontinuierliche Gesamtlinie liefern, läßt sich die Verwendung kurzbrennweitiger Objektive umgehen, die zu starken Verzerrungen neigen.

Bei einer typischen Entfernung des optischen Moduls 12 von der Wicklung 1 von 5 m und der CCD-Kameras 13 von der Wicklung 1 von 2 ½ m und unter Verwendung von Kameras mit einer Auflösung von 1300 x 1024 Pixeln, lassen sich dabei Auflösungen im Bereich von 50 Mikrometer der Höhenschwankungen auf der Wicklung 1 erzielen. Dazu werden die im folgenden dargestellten Auswerteschritte verwendet.

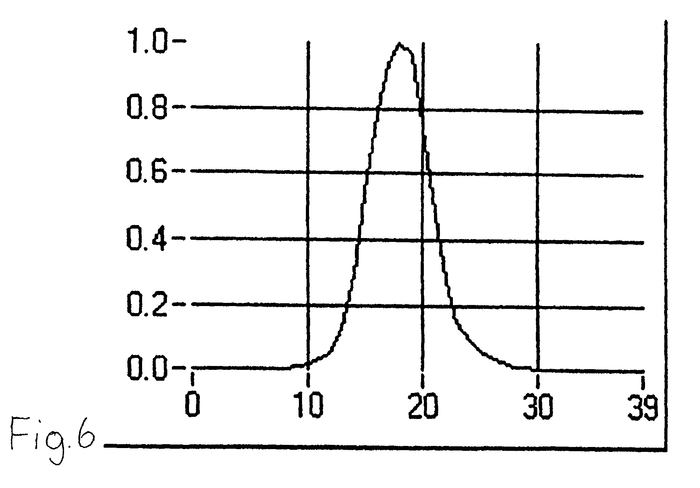

Zunächst wurden die CCD-Elemente der CCD-Kameras 13 so eingestellt, daß sie eine optische Integrationszeit im Bereich von 100 - 200 ms vorgeben. Dann wurde mit der Datenverarbeitung an jeder Stelle der im Monitor 15 angedeuteten Linie ein Mittelwert der in Figur 6 beispielhaft dargestellten Intensitätsverteilung des Linienbildes ermittelt. Dazu werden die beiden Flankenpunkte mit der größten Steigung und der Punkt des absoluten Maximums arithmetisch gemittelt. Die in dieser Weise erzeugte Linie von Mittelwerten wird über eine bestimmte Zahl von Messungen, beispielsweise 100 Messungen, punktweise aufintegriert, woraus sich zusammen mit den bereits erwähnten Eigenbewegungen der Wicklung 1 eine sehr viel feinere Auflösung als die Pixelauflösung der Kameras 13 ergibt. Im vorliegenden Fall konnte eine Pixelauflösung von etwa 0,4 mm durch 100 Messungen auf etwa 0,05 mm verbessert werden. Das entspricht unter Berücksichtigung des Beobachtungswinkels einer Nachweisbarkeit von Unregelmäßigkeiten auf der Oberfläche 3 der Wicklung 1 ab etwa 0,8 - 1 mm aufwärts.

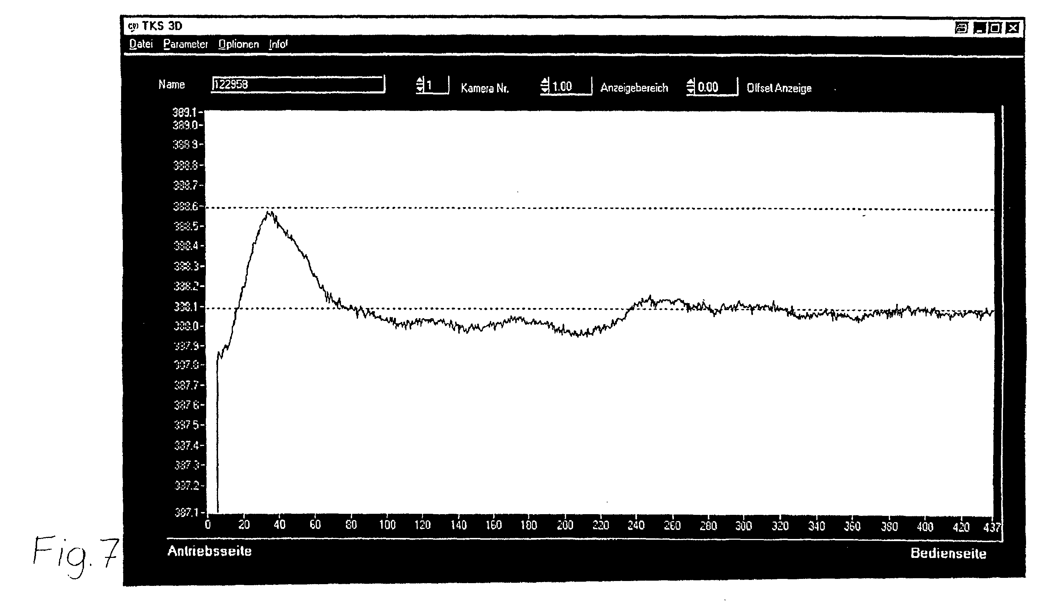

Eine beispielhafte Linie ist in Figur 7 dargestellt. Fig. 7 zeigt eine etwa 430 mm auf der Wicklung 1 entsprechende Profillinie am Rand der Wicklung 1, wobei die Ordinate die noch nicht bezüglich des Beobachtungswinkels korrigierten Höhenwerte und die Abszisse die Breite in mm zeigt. Man erkennt, daß sich in Fig. 7 am linken Rand ein kleiner Wulst von etwa 70 mm Breite und etwa 0,48 mm Höhe herausgebildet hat. Das Rauschen im restlichen Bereich zeigt eine tatsächliche Auflösungsgrenze im Bereich von 0,05 mm und darunter.

Bei der Bewertung der Meßgrenzen des erfindungsgemäßen Verfahrens ist zu berücksichtigen, daß hier die sich über mehrere Wicklungslagen aufsummierten Unregelmäßigkeiten gemessen werden. Die tatsächlich nachweisbaren Unregelmäßigkeiten der Stärke des Blechs sind um den Faktor der sich in diesem Effekt verstärkenden Wicklungslagen kleiner.

Zur Korrektur der Übergänge zwischen den Bildfeldem der einzelnen Videokameras 13 wird sinnvollerweise ein Wickelhöhensignal verwendet, das im vorliegenden Fall aus den erfaßten Bildern selbst abgegriffen wird, und zwar aus der mittleren Höhenlage der Linie im Rohsignalbild.

In beiden Fällen wurde ein gewöhnlicher Industrie-PC zur Signalauswertung, -darstellung und Anlagensteuerung verwendet. Bei dem ersten Ausführungsbeispiel wurde weiterhin eine dem Industrie-PC vorgeschaltete Signalauswerteeinrichtung für die Fotodiodenreihe eingesetzt; bei dem zweiten Ausführungsbeispiel war in die CCD-Kameras 13 jeweils ein Kameraprozessor integriert. Im Vergleich haben beide Typen des erfindungsgemäßen Verfahrens spezifische Vorteile, je nachdem ob auf eher glänzendem oder eher mattem Material gemessen werden soll.

Der zweite Verfahrenstyp ist dadurch von Vorteil, daß im optischen System gänzlich auf bewegte Teile verzichtet wird. Außerdem ist hier ein größerer Arbeitsabstand realisierbar sowie eine geringere Baugröße für das optische System notwendig.

## Patentansprüche

1. Verfahren zum Erfassen von Unregelmäßigkeiten der Stärke einer flexiblen Materialbahn, die über eine Breite der Materialbahn verteilt sind und entlang der Länge der Materialbahn in einer wenig veränderlichen Breitenverteilung auftreten, **dadurch gekennzeichnet,**
**daß** die Materialbahn zu einer Wicklung (1) aufgewickelt wird,
die Wicklung (1) mit einem Lichtbündel (4) bestrahlt wird,
von der Wicklung (1) reflektiertes Licht (5, 14) aus dem Lichtbündel (4) ortsauflösend gemessen (6, 7, 13) wird und
aus der ortsauflösenden Messung (6, 7, 13) Variationen (2) des Oberflächenprofils (3) der Wicklung (1 ) infolge von Unregelmäßigkeiten der Stärke der Materialbahn ermittelt werden.

2. Verfahren nach Anspruch 1, das zum Vermessen aus einer Walzstraße oder Beschichtungsstraße für Blech auslaufender Blechbahnen ausgerichtet ist.

3. Verfahren nach Anspruch 1 oder 2, bei dem das Lichtbündel (4) mit einem Laser (12) erzeugt wird.

4. Verfahren nach einem der vorstehenden Ansprüche, bei dem das Lichtbündel (4) aus sichtbarem Licht besteht.

5. Verfahren nach einem der vorstehenden Ansprüche, bei dem das Lichtbündel (4) aus monochromatischem Licht besteht und bei der Messung ein darauf abgestimmtes Farbfilter verwendet wird.

6. Verfahren nach einem der vorstehenden Ansprüche, bei dem bei der Messung ein schmalbandiges Linienfilter verwendet wird.

7. Verfahren nach einem der vorstehenden Ansprüche, bei dem Abweichungen des Reflexionswinkels einer Spiegelreflexion des Lichtbündels (4) auf der Wicklung (1) durch die ortsauflösende Messung (6, 7) des spiegelreflektierten Bündels (5) erfaßt werden.

8. Verfahren nach Anspruch 5, bei dem die ortsauflösende Messung durch eine Mehrzahl mit einem jeweiligen Anschluß auf ein Bezugspotential bezogene und mit dem anderen jeweiligen Anschluß mit zwischengeschalteten Widerständen in Reihe geschaltete Fotodioden (7) erfolgt, wobei der Diodenabstand kleiner ist als der Durchmesser des spiegelreflektierten Bündels (5).

9. Verfahren nach Anspruch 8, bei dem der Reihe Fotodioden (7) ein Linseharray (6) vorgeschaltet ist.

10. Verfahren nach Anspruch 7, 8 oder 9, bei dem die Bestrahlung mit dem Lichtbündel (4) telezentrisch (11) erfolgt.

11. Verfahren nach einem der Ansprüche 1 - 6, bei dem die Variation des Oberflächenprofils der Wicklung (1) durch ein Lichtschnittverfahren erfaßt wird.

12. Verfahren nach Anspruch 11, bei dem das die Wicklung (1) bestrahlende Lichtbündel (4) einen linienförmigen Querschnitt hat und statisch ist.

13. Verfahren nach einem der vorstehenden Ansprüche, bei dem die ortsauflösende Lichtmessung durch zumindest eine Videokamera (13) erfolgt.

14. Verfahren nach Anspruch 13, bei dem die ortsauflösende Lichtmessung durch eine Mehrzahl nebeneinander in einer Reihe angeordnete Videokameras (13) erfolgt.

15. Verfahren nach einem der vorstehenden Ansprüche, bei dem die Auswertung der ortsauflösenden Messung (13) eine Approximation zweiter Ordnung des Wicklungsoberflächenprofils beinhaltet.

16. Verfahren nach einem der vorstehenden Ansprüche, bei dem die Auswertung der ortsauflösenden Messung (13) eine Hochpaßfilterung des Wicklungsoberflächenprofils beinhaltet.

17. Verfahren nach einem der vorstehenden Ansprüche, bei dem die Auswertung der ortsauflösenden Messung (13) eine Mittelwertbildung lokaler Resultate mehrerer Messungen beinhaltet.

18. Verfahren nach einem der vorstehenden Ansprüche, bei dem ein Wickelhöhensignal zur Korrektur des Bildfeldes bei der ortsauflösenden Messung (13) verwendet wird.

19. Verfahren nach einem der vorstehenden Ansprüche, bei dem die Ortslage eines Lichtsignals durch eine Schwerpunktbildung in einer gemessenen Intensitätsverteilung des Lichtsignals erfolgt.

20. Verfahren nach Anspruch 19, bei dem die Schwerpunktbildung aus den Lagen der beiden Steigungsmaxima und des absoluten Maximus der Intensitätverteilung erfolgt.

21. Verfahren nach einem der vorstehenden Ansprüche, zumindest Anspruch 13, bei dem die Bildverarbeitung mit zumindest einem in der/den Videokamera(s) (13) integrierten Mikroprozessor erfolgt.

22. Vorrichtung (1, 6, 7, 8, 12, 13, 15) zum Erfassen von Unregelmäßigkeiten der Stärke einer flexiblen Materialbahn, die über eine Breite der Materialbahn verteilt sind und entlang der Länge der Materialbahn in einer wenig veränderlichen Breitenverteilung auftreten, zur Durchführung eines Verfahrens nach einem der vorstehenden Ansprüche, **gekennzeichnet durch**
eine Wickeleinrichtung zum Aufwickeln der Materialbahn zu einer Wicklung (1),
eine Beleuchtungseinrichtung (12) zum Bestrahlen der Wicklung (1) mit einem Lichtbündel (4),
eine ortsauflösende Sensoreinrichtung (6, 7, 13) zum ortsauflösenden Messen von von der Wicklung (1) reflektiertem Licht (5, 14) aus dem Lichtbündel (4) aus der Beleuchtungseinrichtung (12) und
eine Auswerteeinrichtung zum Auswerten der ortsauflösenden Messung zur Ermittlung von Variationen des Oberflächenprofils (3) der Wicklung (1) infolge von Unregelmäßigkeiten der Stärke der Materialbahn.

## Claims

1. A method of detecting irregularities in the thickness of a flexible sheet of material, which are distributed over a width of the sheet of material and occur along the length of the sheet of material in a width distribution which changes only slightly, **characterised in that** the sheet of material is wound up to form a roll (1), the roll (1) is illuminated with a light beam (4), light (5, 14) from the light beam (4) reflected by the roll (1) is positionally analytically measured (6, 7, 13) and variations (2) in the surface profile (3) of the roll (1) as a consequence of irregularities in the thickness of the sheet of material are determined from the positionally analytical measurement (6, 7, 13).

2. A method as claimed in Claim 1 which is arranged to survey sheets of metal exiting from a rolling mill or a coating line for sheet metal.

3. A method as claimed in Claim 1 or 2, in which the light beam (4) is produced with a laser (12).

4. A method as claimed in one of the preceding claims, in which the light beam (4) consists of visible light.

5. A method as claimed in one of the preceding claims, in which the light beam (4) consists of monochromatic light and a colour filter matched to it is used in the measurement.

6. A method as claimed in one of the preceding claims, in which a narrow band line filter is used in the measurement.

7. A method as claimed in one of the preceding claims, in which variations in the angle of reflection of a mirror reflection of the light beam (4) on the roll (1) are detected by the positionally analytical measurement (6, 7) of the mirror reflected beam (5).

8. A method as claimed in Claim 5, in which the positionally analytical measurement is effected by a plurality of photodiodes (7) with one respective connection at a reference potential and with the other respective connection with interposed resistors connected in series, the diode spacing being smaller than the diameter of the mirror reflected beam (5).

9. A method as claimed in Claim 8, in which a lens array (6) is provided in front of the series of photodiodes (7).

10. A method as claimed in Claim 7, 8 or 9, in which the illumination with the light beam (4) is effected telecentrically.

11. A method as claimed in one of Claims 1-6, in which the variation in the surface profile of the roll (1) is detected by means of a light intersection method.

12. A method as claimed in Claim 11, in which the light beam (4) illuminating the roller (1) has a linear cross-section and is static.

13. A method as claimed in one of the preceding claims, in which the positionally analytical light measurement is effected by means of at least one video camera (13).

14. A method as claimed in Claim 13, in which the positionally analytical light measurement is effected by a plurality of video cameras (13) arranged next to one another in a row.

15. A method as claimed in one of the preceding claims, in which the evaluation of the positionally analytical measurement (13) includes a second order approximation of the roll surface profile.

16. A method as claimed in one of the preceding claims, in which the evaluation of the positionally analytical measurement (13) includes a high pass filtering of the roll surface profile.

17. A method as claimed in one of the preceding claims, in which the evaluation of the positionally analytical measurement (13) includes the formation of a mean value of local results of a plurality of measurements.

18. A method as claimed in one of the preceding claims, in which a roll height signal is used to correct the image field in the positionally analytical measurement ( 13).

19. A method as claimed in one of the preceding claims, in which the location of a light signal is effected by forming a centre of mass in a measured intensity distribution of the light signal.

20. A method as claimed in Claim 19, in which the focal point formation is effected from the positions of the two gradient maxima and the absolute maximum of the intensity distribution.

21. A method as claimed in one of the preceding claims, particularly Claim 13, in which the image processing is effected with at least one microprocessor integrated into the video camera(s) (13).

22. An apparatus (1, 6, 7, 8, 12, 13, 15) for detecting irregularities in the thickness of a flexible sheet of material, which are distributed over a width of the sheet of material and occur along the length of the sheet of material in a width distribution which alters only slightly, for carrying out a method as claimed in one of the preceding claims, **characterised by** a winding device for rolling up the sheet of material to form a roll (1), an illumination device (12) for illuminating the roll (1) with a beam of light (4), a positionally analytical sensor device (6, 7, 13) for positionally analytically measuring light (5, 14) reflected from the roll (1) from the light beam (4) from the illumination device (12) and an evaluation device for evaluating the positionally analytical measurement to determine variations in the surface profile (3) of the roll (1) as a consequence of irregularities in the thickness of the sheet of material.

## Revendications

1. Procédé pour détecter des irrégularités de l'épaisseur d'une bande de matériau flexible, qui sont réparties sur une largeur de la bande de matériau et apparaissent le long de la longueur de la bande de matériau dans une répartition de largeurs peu variable, **caractérisé en ce que**
la bande de matériau est enroulée en un enroulement (1),
l'enroulement (1) est exposé à un faisceau lumineux (4),
la lumière (5, 14) du faisceau de lumière (4) réfléchie par l'enroulement (1) est mesurée (6, 7, 13) avec une résolution locale et
des variations (2) du profil de surface (3) de l'enroulement (1) dues aux irrégularités de l'épaisseur de la bande de matériau sont déterminées à partir de la mesure (6, 7, 13) à résolution locale.

2. Procédé selon la revendication 1, qui est adapté pour la mesure à partir d'un train de laminoir ou d'un train de revêtement pour tôle de bandes de tôle sortantes.

3. Procédé selon la revendication 1 ou 2, selon lequel le faisceau lumineux (4) est généré avec un laser (12).

4. Procédé selon l'une quelconque des revendications précédentes, selon lequel le faisceau lumineux (4) est à base de lumière visible.

5. Procédé selon l'une quelconque des revendications précédentes, selon lequel le faisceau lumineux (4) est à base de lumière monochromatique et un filtre couleur adapté à cette mesure est utilisé lors de la mesure.

6. Procédé selon l'une quelconque des revendications précédentes, selon lequel un filtre à lignes à bande étroite est utilisé lors de la mesure.

7. Procédé selon l'une quelconque des revendications précédentes, selon lequel des écarts de l'angle de reflexion d'une réflexion de miroir du faisceau lumineux (4) sur l'enroulement (1) sont détectés par la mesure (6, 7) à résolution locale du faisceau (5) réfléchi par le miroir.

8. Procédé selon la revendication 5, selon lequel la mesure à résolution locale s'effectue par une pluralité de photodiodes (7) rapportées à un potentiel de référence avec un branchement respectif et branchées en série avec des résistances intercalées avec l'autre branchement respectif, l'espacement des diodes étant inférieur au diamètre du faisceau (7) réfléchi par le miroir ;

9. Procédé selon la revendication 8, selon lequel un agencement de lentilles (6) est monté en amont de la série de photodiodes (7).

10. Procédé selon la revendication 7, 8 ou 9, selon lequel l'exposition avec le faisceau lumineux (4) effectue de façon télécentrique (11).

11. Procédé selon l'une quelconque des revendications 1 à 6, selon lequel la variation du profil de surface de l'enroulement (1) est détectée par un procédé de coupe optique.

12. Procédé selon la revendication 11, selon lequel le faisceau lumineux (4) irradiant l'enroulement (1) a une section de forme linéaire et est statique.

13. Procédé selon l'une quelconque des revendications précédentes, selon lequel la mesure de lumière à résolution locale s'effectue par au moins une caméra vidéo (13).

14. Procédé selon la revendication 13, selon lequel la mesure de lumière à résolution locale s'effectue par un nombre de caméras vidéo (13) disposées dans une rangée les unes à côté des autres.

15. Procédé selon l'une quelconque des revendications précédentes, selon lequel l'analyse de la mesure (13) à résolution locale inclut une approximation de second ordre du profil de surface de l'enroulement.

16. Procédé selon l'une quelconque des revendications précédentes, selon lequel l'analyse de la mesure (13) à résolution locale comprend un filtrage passe-haut du profil de surface d'enroulement.

17. Procédé selon l'une quelconque des revendications précédentes, selon lequel l'analyse de la mesure (13) à résolution locale inclut une formation de valeur moyenne de résultats locaux de plusieurs mesures.

18. Procédé selon l'une quelconque des revendications précédentes, selon lequel un signal de hauteur d'enroulement est utilisé pour la correction du champ d'image lors de la mesure (13) à résolution locale.

19. Procédé selon l'une quelconque des revendications précédentes, selon lequel la position locale d'un signal lumineux s'effectue par une formation du centre de gravité dans une répartition d'intensité mesurée du signal lumineux.

20. Procédé selon la revendication 19, selon lequel la formation du centre de gravité s'effectue à partir des positions des deux maximums de pente et du maximum absolu de la répartition d'intensité.

21. Procédé selon l'une quelconque des revendications précédentes, selon au moins la revendication 13, selon lequel le traitement d'images s'effectue avec au moins un microprocesseur intégré dans la (les) caméra(s) vidéo (13).

22. Dispositif (1, 6,7, 8, 12, 13, 15) pour la détection d'irrégularités de l'épaisseur d'une bande de matériau flexible qui sont réparties sur une largeur de la bande de matériau et apparaissent le long de la longueur de la bande de matériau dans une répartition de largeurs moins variable, pour l'application d'un procédé selon l'une quelconque des revendications précédentes, **caractérisé par**
un système d'enroulement pour l'enroulement de la bande de matériau en un enroulement (1),
un système d'éclairage (12) pour l'éclairage de l'enroulement (1) avec un faisceau lumineux (4),
un système capteur (6, 7, 13) à résolution locale pour la mesure à résolution locale de lumière (5, 14) réfléchie par l'enroulement (1) et provenant du faisceau lumineux (4) provenant du système d'éclairage (12) et
un système d'analyse pour l'analyse de la mesure à résolution locale pour la détermination de variations du profil de surface (3) de l'enroulement (1) dues aux irrégularités de l'épaisseur de la bande de matériau.
